Europäisches Patentamt

European Patent Office

Office européen des brevets

(19)

(11) Publication number: **0 088 840**
**B1**

(12) **EUROPEAN PATENT SPECIFICATION**

(45) Date of publication of patent specification: **08.07.87**

(51) Int. Cl.⁴: **G 06 F 15/16,** G 06 F 13/00

(21) Application number: **82301277.8**

(22) Date of filing: **12.03.82**

(54) Identifier assignment apparatus.

(43) Date of publication of application:
**21.09.83 Bulletin 83/38**

(45) Publication of the grant of the patent:
**08.07.87 Bulletin 87/28**

(84) Designated Contracting States:
**DE FR GB IT SE**

(56) References cited:
**US-A-4 035 777**

**IEEE TRANSACTIONS ON NUCLEAR SCIENCE,
vol. NS16, no. 1, February 1969, pages 154-161,
New York, USA, J. HAHN et al.: "The design of
derandomizing buffer stores for high data
rates"**

(73) Proprietor: **Honeywell Information Systems Inc.
200 Smith Street
Waltham County of Middlesex, Massachusetts
02154 (US)**

(72) Inventor: **Twibell, Jerome J.
3528 W. Augusta Avenue
Phoenix Arizona (US)**
Inventor: **Johnston, Robert J.
3460 W. Gelding Drive
Phoenix Arizona (US)**

(74) Representative: **Votier, Sidney David et al
CARPMAELS & RANSFORD
43 Bloomsbury Square
London WC1A 2RA (GB)**

Courier Press, Leamington Spa, England.

# 0 088 840

## Description

This invention relates to identifier assignment apparatus; that is, to apparatus in a computer system which, in response to a series of transactions, can issue a corresponding series of distinct identifiers.

In certain data processing systems, a block of information may have to be moved from a primary unit to a secondary unit, processed in the secondary unit, and returned to the primary unit. Part of the block may be unchanged in the processing; for example, the block may initially comprise an address, the data read from that address, and some operation code, and the secondary unit may perform the required operation on the data (thereby changing the data portion of the block and effectively deleting the operation code from the block) and return it to the primary unit for storage back at the same address.

This process involves the transfer of the whole of the block from the primary unit to the secondary unit and back again, and therefore requires data paths of great width (or the use of a plurality of cycles for the transfer using paths of width less than the size of the block). In principle, this involves inefficiency, since part of the block is unchanged during the transfer from the primary unit to the secondary unit and back again.

One solution to this inefficiency would be to transfer only those parts of the block which are required by the secondary unit while retaining in the primary unit those parts which do not change. However, this means that the primary unit will have to enter a wait state, in which it holds the retained part of the block while the secondary unit is performing its functions on the transferred parts of the block until the modified parts of the block are returned to the primary unit. The primary unit is therefore unable to perform other functions during that interval, and in particular is unable to initiate further operations of the same type. This may be particularly important if, for example, the primary unit is a central processing unit and there is a plurality of secondary units consisting of peripheral units.

The main object of the present invention is to provide identifier assignment apparatus which can be placed between a primary unit and one or more secondary units and which will, in response to the initiation of a transaction (the sending of a block from the primary unit to a secondary unit) issue a distinct identifier for each transaction, by means of which the transaction can be identified by the primary unit when the modified block is returned by the secondary unit. It is evident that the apparatus must also have the ability to delete identifiers, since otherwise an indefinately large number of identifiers would be needed, and even if some practical limit were placed on their number, they would nevertheless be of substantial size.

US—A—4 035 777 describes a system in which different modules of a data processing system exchange data by means of a common memory, which has an associated pointer queue store. A module with data to send removes the first pointer from the queue store (which initially contains all pointers), uses this to store the data in the common memory, and sends the pointer to the module to receive the data. The latter module uses the pointer to retrieve the data from the common memory and returns the pointer to the end of the queue store. Thus the queue store is operated as a first-in-first-out memory.

According to the present invention as claimed there is provided identifier assignment apparatus, for assigning distinct identifiers in response to the initiation of transactions, comprising an identifier memory (12) initially loaded with a set of identifiers, characterized by

a count unit (10, 11) pointing to a pair of adjacent locations in the identifier memory, and control means (14) which

— when an identifier is to be assigned, read out the identifier in the upper (R) of the two locations and increment the counter unit, and

— when an identifier is to be deleted, write it in the lower (W) of the two locations and decrement the counter unit.

In the application of this apparatus in the system discussed above, there is also a need for the unchanging parts of the blocks to be stored and retrieved by means of the identifiers. The apparatus therefore preferably includes a data memory having a plurality of locations addressable by the identifiers, the control means writing an incoming item of data into the data memory when a transaction is initiated, and reading an item of data from the data memory when the item corresponding to an assigned identifier is required. Thus this apparatus has the effect of replacing the unchanging portion of a block by an identifier as the block passes from the primary unit to a secondary unit, and changing the identifier back into the unchanging part of the block as the block returns from the secondary unit to the primary unit. The identifiers chosen will have a substantially smaller size than the items of data which they replace, and the paths between the apparatus and the secondary units will therefore be narrower than would be required if the blocks passed unchanged.

The apparatus may be regarded as a port or interface of the primary unit.

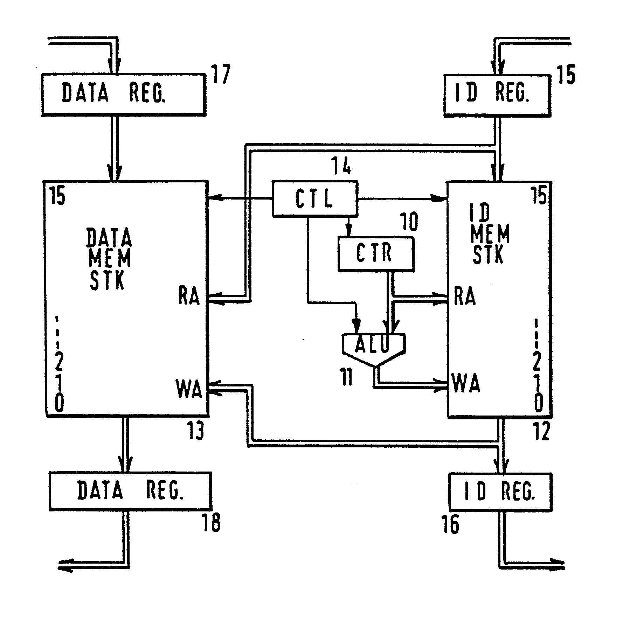

Identifier assignment means in accordance with the invention will now be described, by way of example, with reference to the drawing, which is a block diagram of the apparatus.

On the left-hand side of the drawing, there is a data memory stack 13 which is coupled to a primary unit (not shown) via two data registers, an input register 17 and an output register 18. On the right-hand side, there is an identifier memory stack 12 which is coupled to the secondary unit or units (not shown) via two identifier registers, an input register 15 and an output register 16. Each of the stacks 12 and 13 has two address inputs, a read address input RA and a write address input WA, such that information (data or

2

identifier, as the case may be) is read from the address fed to the read address input RA and written into the address fed to the write address input WA. Reading and writing can be simultaneous.

The general operation of the apparatus is that an item of data is fed in via the input data register 17, and this results in an identifier being fed out via the identifier output register 16. At the same time, the data is stored in the data memory stack 13. Subsequently, the identifier is fed in via the identifier input register 15, and in consequence the corresponding data item is read out from the data memory stack 13 to the data output register 18. If the operation is completed, at the same time the location in the memory stack 13 from which the item of data has just been read out is tagged as free, so that that item of data is now cleared from the system and no longer identifiable, and the location can be used for further item of data.

The two memory stacks 12 and 13 have the same number of locations. However, each location in the data stack 13 has to be long enough to store a full item of data, whereas the length of the locations in the identifier memory stack 12 has to be long enough only to store as many distinct identifiers as there are locations. Thus supposing for convenience that there are 16 locations in the memory stacks 12 and 13, the identifiers will be 0 to 15 and each location in stack 12 will be 4 bits long.

The identifier memory stack 12 is addressed by means of a counter 10, directly for reading (read address RA) and via an arithmetic and logic unit 11, acting as a substract by 1 circuit, for writing (write address WA). The counter is incremented and decremented by a control circuit 14, which also controls the arithmetic and logic unit 11 and the reading and writing of the two memory stacks 12 and 13. The counter 10 therefore points to two adjacent addresses in the identifier memory stack 12. As will be seen, the number in the counter 10 represents the number of items of data stored in the apparatus, and the identifier memory stack 12 contains, in the locations above the addresses pointed to, the empty locations in the data memory stack 13. The contents of the identifier memory stack in the locations below the locations pointed to by the counter 10, i.e. locations 0 up to the pointed-to locations, are irrelevant to the operation; in fact, the contents of these locations represent to some extent the past history of the usage of the apparatus.

The operation of the apparatus can be understood by considering initially what happens when a series of items of data are fed to it. Initially the identifier memory stack 12 contains a sequence of identifiers 0 to 15 in the corresponding locations, the counter 10 contains a count of 0, and the data memory stack 13 contains dummy data in all its locations. Suppose now that several items of data are fed to the apparatus. For the first item, the counter 10 has a count of 0, pointing to location 0 in stack 12, and thus reading out identifier 0. This identifier is fed to identifier output register 16, so that it takes the place of the input item of data. It is also fed to the WA input of stack 13, so that the input item of data is written into location 0 in stack 13. This writing causes the counter 14 to be incremented, so that it now contains the count of 1.

The next input item of data causes location 1 of the identifier stack 12 to be read (since counter 10 contains a count of 1). This reads the identifier 1 from stack 12, and this is fed out through register 16 and is also fed to the write address input WA of the data memory stack 13, so that this item of data is stored in stack 13. The counter 10 is thereupon incremented, to a count of 2.

Further input items of data are treated the same way, each one causing the next identifier up the stack 12 to be read out, being stored in the corresponding location in the data memory stack 13, and causing the counter 10 to be incremented.

Suppose that 8 input items of data are fed in altogether, so that the identifiers 0 to 7 inclusive have been used. The count in counter 10 is 8, the total number of items of data in the apparatus.

Suppose now that the items of data associated with the identifier 2, 3, and 4 are required. It is assumed that these items are required temporarily, during the processing associated with these identifiers in the secondary unit, and are to remain in the system. These identifiers are fed, one by one, to the identifier input register 15, and are fed from that register to the read address input RA of the data memory stack 13. The result is that the items of data in locations 2, 3, and 4 of the stack 13 are read out into the data output register 18, as required. The identifier stack 12 is inhibited from any operation at this time.

It can thus be seen that the item of data associated with any identifier in use can be retrieved and made available back to the primary unit, and that this does not affect that state of the system — i.e., the association between the item of data and its identifier remains unchanged, and the item of data remains available in the system.

Suppose now that the operations associated with identifiers 5 and 3 are completed, so that the items of data associated with these identifiers are to be retrieved and the system is to be cleared as far as these items of data and identifiers are concerned. The items of data are retrieved as just described, by means of the identifiers in register 15 being used, one after the other, to read the data memory stack 13. In addition, each identifier in register 15 is written into the identifier memory stack 12, at the write location pointed to by the counter 10 via the ALU 11, and the counter 10 is decremented on each writing.

The effect of this is as follows. It will be recalled that 8 identifiers were in use, and the count in counter 10 was therefore 8. Identifier 5 is written into the stack 12 at location 7 (count of counter 10 decremented by 1), and the counter is decremented by 1 to a count of 7. Then, identifier 3 is written into the stack 12 at location 6 (count of counter 12 decremented by 1) and the counter is decremented by 1 to a count of 6.

The effect of this can be shown by a listing of the identifiers in stack 12. Initially, the identifiers are in numerical order, and the counter 10 points to them as shown after the initial 8 items of data have been entered into the system:

**0 088 840**

```
0  1  2  3  4  5  6  7  8  9  10  11  12  13  14  15
                  W  R
```

where the R indicates the location pointed to by the counter 10 feeding the read address input RA, and the W indicates the location pointed to by the counter 10 via the ALU 11 feeding the write address WA. It is convenient for the identifiers to be in numerical order initially, though this is not necessary. When the identifier 5 is to be effectively cleared from the system, it is written into the location identified by the write address, indicated by W, and the counter is decremented by 1. The identifier 3 is the next to be cleared from the system, and this is written into the location indicated by the new position of the W, and the counter is again decremented by 1. The result is as follows:

```
0  1  2  3  4  5  3  5  8  9  10  11  12  13  14  15
                  W  R
```

The contents of the locations up to and including that indicated by W are irrelevant; but the locations starting with that identified by R and upwards constitute a list of the available identifiers, i.e., the identifiers not currently in use and thus available for future use. It is evident that each time an identifier in use is cleared from the system, it is added to the inner end of this list of identifiers not currently in use, and the counter is decremented to extend this list. Correspondingly, each time an identifier is required, it is taken from the inner end of this list, and the counter is incremented to remove that identifier from the list. The total set of identifiers is 0 to 15, and of these, those in use will be resident in the secondary system, while those not in use will be in the list in the upper part of the stack 22. The identifiers in the lower part of the stack 12 have no significance, and will be determined by the past history of the system.

It was stated above that the stacks 12 and 13 can each be written and read simultaneously, meaning, more precisely, in a single clock period. The significance of this is that it allows an item of data to be entered into the system and existing identifier to be cleared from the system simultaneously. The incoming item of data is entered into the input data register 17, and the current read location in the identifier memory stack 12 is read to obtain an identifier for that input item of data. Later in the clock cycle, the input item of data is written into the data memory stack 13 at the location corresponding to the identifier, which is now also in the identifier output register 16. At the same time as the new identifier is being read from the stack 12, the identifier which is being cleared from the system is entered into the identifier input register 15 and is used to read the corresponding item of data from the data memory stack 13 into the data output register 18. Then at the same time as the new item of data is being written into the stack 13, the old identifier is written into the identifier memory stack 12.

It will be realized that the count in counter 10 will remain unchanged during such a simultaneous entry of a new item of data and clearing of an old item of data. In addition, the old identifier has to be written into the same location in the identifier memory stack 12 as the new identifier was read from. Hence the read and write addresses must be the same for this combined operation, and the ALU 11 is therefore controlled by the control logic 14 so as to pass the count in counter 10 directly to the write address input WA without decrementing for this combined operation.

It is also, of course, possible to enter a new item of data into the system in the same clock period as the accessing of an existing item of data without the clearing of the associated identifier.

The counter 10 produces an overflow signal when it reaches its maximum count of 16, indicating that the system has assigned the maximum available number of identifiers, and can therefore not accept any further items of data.

**Claims**

1. Identifier assignment apparatus, for assigning distinct identifiers in response to the initiation of transactions, comprising an identifier memory (12) initially loaded with a set of identifiers, characterized by
a count unit (10, 11) pointing to a pair of adjacent locations in the identifier memory, and
control means (14) which
— when an identifier is to be assigned, read out the identifier in the upper (R) of the two locations and increment the counter unit, and
— when an identifier is to be deleted, write it in the lower (W) of the two locations and decrement the counter unit.

2. Identifier assignment apparatus according to Claim 1, characterized by a data memory (13) having a plurality of locations addressable by the identifiers, the control means (14) writing an incoming item of data into the data memory when a transaction is initiated, and reading an item of data from the data memory when the item corresponding to an assigned identifier is required.

3. Identifier assignment apparatus according to either previous claim, characterized in that the counter unit comprises a counter (10) and a decrement by 1 unit (11).

4. Identifier assignment apparatus according to any previous claim, characterized in that the or each

4

## 0 088 840

memory can be written in and read from simultaneously, whereby an existing identifier can be deleted and a new identifier assigned simultaneously.

5. Identifier assignment apparatus according to any previous claim, characterized in that the counter unit provides an overflow signal when the lower (W) of the two locations it points to is the highest in the identifier memory.

### Patentansprüche

1. Gerät zum Zuteilen unterschiedlicher Identifizierungen bei der Einleitung von Transaktionen mit einem Identifizierungsspeicher (12), der anfänglich mit einem Satz von Identifizierungen geladen ist, gekennzeichnet durch

eine Zählereinheit (10, 11), welche auf ein Paar benachbarter Speicherplätze im Identifizierungsspeicher hinweist, und eine Steuereinrichtung (14), die

— falls eine Identifizierung zugeordnet werden soll, die Identifizierung im oberen (R) der beiden Plätze ausliest und die Zählereinheit fortschaltet; und

— falls eine Identifizierung zu beseitigen ist, die Identifizierung in den unteren (W) der beiden Plätze einschreibt und die Zähleinheit zurückschaltet.

2. Gerät zum Zuteilen von Identifizierungen nach Anspruch 1, gekennzeichnet durch einen Datenspeicher (13) mit mehreren durch die Identifizierungen adressierbaren Speicherplätzen, wobei die Steuereinheit (14) ein ankommendes Datenelement in den Datenspeicher einschreibt, sobald eine Transaktion in Gang gesetzt wird; und ein Datenelement aus dem Datenspeicher ausliest, sobald das der zugeordneten Identifizierung entsprechende Datenelement benötigt wird.

3. Gerät zur Zuteilung von Identifizierungen nach einem vorangehenden Anspruch, dadurch gekennzeichnet, daß die Zählereinheit einen Zähler (10) sowie eine Einheit (11) zum Zurückschalten um jeweils einen Zählschritt umfaßt.

4. Gerät zur Zuteilung von Identifizierungen nach einem der vorangehenden Ansprüche, dadurch gekennzeichnet, daß der oder jeder Speicher zum gleichzeitigen Einschreiben und Auslesen geeignet ist, wodurch eine bestehende Identifizierung entfernt und gleichzeitig eine neue Identifizierung zugeordnet werden kann.

5. Gerät zum Zuteilen von Identifizierungen nach einem vorangehenden Anspruch, dadurch gekennzeichnet, daß die Zähleinheit ein Überlaufsignal liefert, wenn der untere (W) der beiden Speicherplätze, auf den sie hinweist, der höchste im Identifizierungsspeicher ist.

### Revendications

1. Dispositif d'attribution d'identificateurs, pour attribuer des identificateurs distincts en réponse au déclenchement de mouvements, comprenant une mémoire d'identificateurs (12) chargée initialement avec un groupe d'identificateurs, caractérisé par

— une unité de comptage (10, 11) désignant une paire d'emplacements voisins dans la mémoire d'identificateurs, et

— un moyen de commande (14) qui

— lorsqu'un identificateur doit être attribué, lit l'identificateur dans le plus haut (R) des deux emplacements et fait progresser l'unité de comptage, et

— lorsqu'un identificateur doit être effacé, l'écrit dans le plus bas (W) des deux emplacements et fait régresser l'unité de comptage.

2. Dispositif d'attribution d'identificateurs selon la revendication 1, caractérisé par une mémoire de données (13) comportant un ensemble d'emplacements adressables par les identificateurs, le moyen de commande (14) écrivant un élément de donnée en entrée dans la mémoire de données quand un mouvement est déclenché, et lisant un élément de donnée en mémoire de données quand l'élément correspondant à un identificateur attribué est nécessaire.

3. Dispositif d'attribution d'identificateurs selon l'une quelconque des revendications 1 et 2, caractérisé en ce que l'unité de comptage comprend un compteur (10) et une unité de régression de 1 (11).

4. Dispositif d'attribution d'identificateurs selon l'une quelconque des revendications 1 à 3, caractérisé en ce qu'une écriture et une lecture peuvent être effectuées simultanément dans la ou dans chaque mémoire, un identificateur existant pouvant ainsi être effacé et un nouvel identificateur attribué simultanément.

5. Dispositif d'attribution d'identificateurs selon l'une quelconque des revendications 1 à 4, caractérisé en ce que l'unité de comptage fournit un signal de dépassement quand le plus bas (W) des deux emplacements qu'il désigne est le plus haut dans la mémoire d'identificateurs.